**Europäisches Patentamt**

**European Patent Office**

**Office européen des brevets**

(11) Numéro de publication : **0 311 500 B1**

# (12) FASCICULE DE BREVET EUROPEEN

(45) Date de publication du fascicule du brevet :
**03.06.92 Bulletin 92/23**

(51) Int. Cl.$^5$ : **H04N 3/12**

(21) Numéro de dépôt : **88402499.3**

(22) Date de dépôt : **04.10.88**

(54) **Procédé de visualisation d'images en demi-teintes sur un écran matriciel.**

(30) Priorité : **09.10.87 FR 8713959**

(43) Date de publication de la demande :
**12.04.89 Bulletin 89/15**

(45) Mention de la délivrance du brevet :
**03.06.92 Bulletin 92/23**

(84) Etats contractants désignés :
**DE GB NL**

(56) Documents cités :
**GB-A- 2 162 674**
**US-A- 3 863 023**

(73) Titulaire : **THOMSON-CSF**
**51, Esplanade du Général de Gaulle**
**F-92800 Puteaux (FR)**

(72) Inventeur : **Barbier, Bruno**
**THOMSON-CSF SCPI 19, avenue de Messine**
**F-75008 Paris (FR)**
Inventeur : **Perbet, Jean-Noel**
**THOMSON-CSF SCPI 19, avenue de Messine**
**F-75008 Paris (FR)**
Inventeur : **Favot, Jean-Jacques**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

EP 0 311 500 B1

## Description

L'invention concerne un procédé de visualisation d'images en demi-teintes sur un écran matriciel monochrome ou couleur, non prévu à cet effet.

L'invention s'applique à des écrans à plasma, électro-luminescents, fluorescents, à diodes électro-luminescentes, à cristal liquide, etc .... Elle est, en particulier, bien adaptée aux écrans matriciels et permet d'obtenir des demi-teintes sans dégradation des performances électro-optiques nominales de ces écrans (aspects, contrastes, couleur, angle de vue, scintillement, etc ...)

Il est possible, en particulier, d'obtenir par le procédé mis en oeuvre une palette couleur étendue sur un écran initialement prévu pour huit couleurs de base.

On appelle demi-teintes (ou par abus de langage teintes de gris), tout état de luminosité ou de contraste intermédiaire entre deux extréma de la réponse d'un effet électro-optique.

Différentes méthodes sont utilisées pour obtenir des demi-teintes. Une première méthode consiste à produire une répartition spatiale, ou tramage, en modulant la surface de la zone excitée, par exemple en subdivisant le pixel en une ou plusieurs zones de surfaces différentes ou, plus simplement, en n'allumant qu'un pixel sur deux. Cette méthode a pour inconvénient d'augmenter la complexité technologique de l'écran ou de dégrader la définition de l'image.

Une autre façon est de modifier l'intensité de l'effet électro-optique en modulant l'amplitude de la tension appliquée au matériau électro-optique ou le temps d'application de cette tension. Ce procédé qui est celui généralement utilisé nécessite des circuits de commande de l'écran plus complexes et plus performants que ceux qui sont utilisés pour les écrans sans demi-teintes.

Un troisième procédé consiste à produire une modulation temporelle en excitant par exemple une fois sur deux les pixels pour obtenir par moyenne temporelle un niveau de luminance intermédiaire. Il en résulte une augmentation de l'effet de papillotement dit "flicker" en anglais.

Le but de l'invention est la mise en oeuvre d'une méthode de modulation temporelle quine produit pas de papillotement et qui, comme on le verra, utilise les circuits de commande de l'écran ordinairement non prévus à cette fin. La modulation s'effectue au niveau d'une mémoire d'image associée à l'écran et non plus au niveau des circuits périphériques d'adressage de l'écran.

Selon l'invention il est conçu un procédé de visualisation d'images en demi-teintes sur un écran matriciel procédant par :

– élaboration de l'information de luminance relative à un pixel de l'image selon un mot de N bits (N supérieur ou égal à 2) ;

– stockage des informations de luminance dans N plans mémoires pour y stocker respectivement les différents bits de chaque mot ;

– adressage des plans pour produire, par une lecture séquentielle de ceux-ci, N images visualisées successives dans lesquelles un groupement quelconque de N pixels adjacents est obtenu en prélevant pour chaque pixel du groupement, un bit de luminance dans un plan mémoire différent de ceux déjà utilisés pour ce pixel lors de la formation des images précédentes, de manière à prélever les N bits du mot de luminance correspondant à ce pixel, et en prélevant à chaque image un bit de luminance dans un plan mémoire différent pour chacun des pixels du groupement, en sorte de prélever à chaque image un bit de luminance dans chaque plan mémoire ;

le procédé utilisé permettant d'obtenir pour chaque pixel au cours de N balayages successifs d'images, en sus des deux valeurs de luminance blancet noir correspondant aux deux états binaires "0" et "1", N - 1 valeurs intermédiaires correspondant à des demi-teintes.

La moyenne temporelle qui se produit sur deux ou plusieurs images dépend de l'effet électro-optique utilisé. Il y a un effet lié à la tension instantanée ; par exemple, dans le cas de diodes électroluminescentes, la moyenne se fait au niveau de l'oeil grâce à la durée de persistance rétinienne (40ms environ) ; pour des périodes supérieures à cette durée le papillotement devient sensible. Il y a par ailleurs un effet lié à la tension efficace ; par exemple dans le cas de cristal liquide, cette tension dépend du produit de l'amplitude par largeur de l'impulsion appliquée. La moyenne s'effectue au niveau du matériau électro-optique sur une ou plusieurs impulsions ; elle dépend, en particulier, des performances électriques du matériau électro-optique et de l'élément de commande associé s'il existe.

D'une manière générale, cette moyenne temporelle est une combinaison de celles au niveau du matériau électro-optique et de l'oeil de l'observateur.

Les particularités et avantages de l'invention apparaîtront dans la description qui suit donnée à titre d'exemple à l'aide des figures annexées qui représentent :

– Fig.1, un bloc-diagramme général d'un système de visualisation conforme à l'invention ;

– Fig.2, un schéma partiel relatif à la conception de la mémoire d'image ;

– Figs. 3 et 4, une zone de la matrice au cours de deux balayages successifs d'image pour mettre en évidence le procédé de prélèvement alterné dans le plan mémoire des informations de luminance relatives aux pixels successifs d'une image monochrome ;

– Figs. 5 et 6, des schémas équivalents à ceux des figures 3 et 4 mais dans le cas d'une image couleur avec disposition en ligne des pixels ;

– Figs. 7 et 8, des schémas équivalents à ceux des figures 3 et 4 dans le cas d'une image couleur avec disposition en diagonale des pixels ;

– Figs. 9 et 10, une représentation partielle des figures 7 et 8 relative à la couleur rouge ;

– Figs. 11A et 11B, 12A et 12B, dans le cas d'un afficheur à cristal liquide le signal d'excitation et de luminosité d'un pixel, respectivement pour l'état non excité et pour l'état excité ;

– Fig. 13, un diagramme d'un mode de conception de l'ensemble afficheur, mémoire d'image et séquenceur.

Le système comporte un générateur d'image pour produire les signaux vidéo sous forme numérique et dans lesquels l'information de luminance relative à chaque pixel d'une image considérée est produite selon un mot de au moins deux bits.

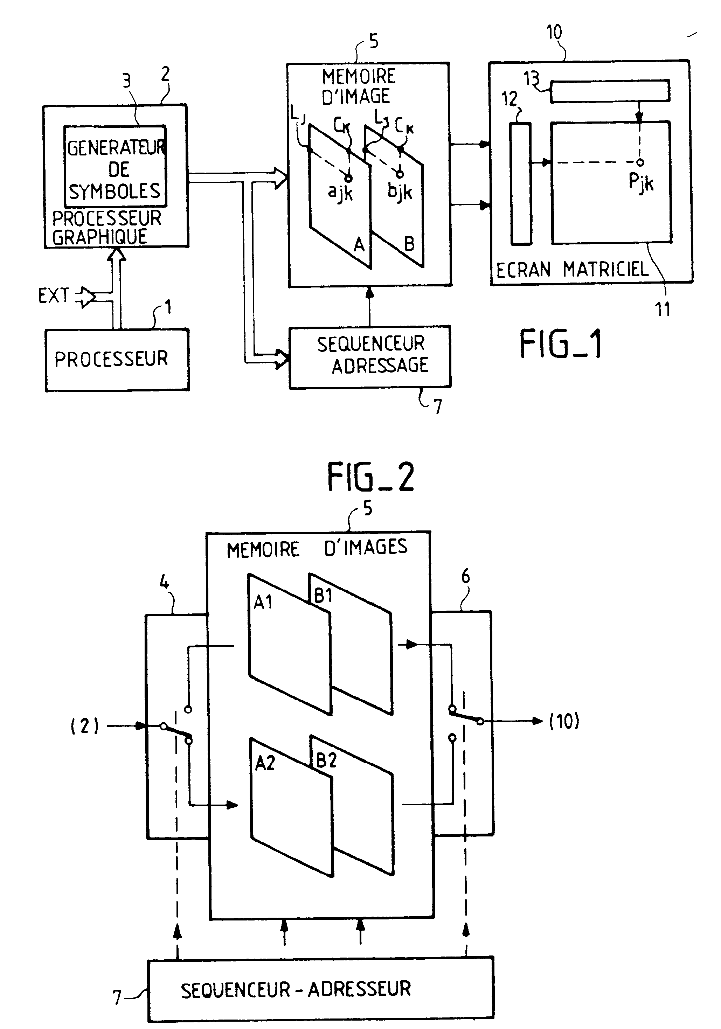

Dans le cas d'une image alphanumérique, ou de symboles, le générateur d'images peut consister, comme représenté sur la figure 1, en un processeur graphique 2 contrôlé par un processeur 1, le processeur graphique comportant un générateur de symboles 3.

Une mémoire d'image 5 est interposée entre le générateur et l'écran matriciel de visualisation. Cette mémoire d'image comporte au moins deux plans.

On considère dans ce qui suit l'exemple plus simple de conception et de compréhension où la luminance est codifiée selon un mot de deux bits et où la mémoire 5 comporte deux plans.

La luminance binaire d'un pixel de la ligne $L_j$ et de la colonne $C_k$ est composé du premier bit $a_{jk}$ stocké sous forme électrique dans un premier plan mémoire A et d'un deuxième bit $b_{jk}$ stocké dans le deuxième plan mémoire B. Un circuit séquenceur 7 produit l'adressage de la mémoire 5 à l'écriture et la lecture.

Le dispositif de visualisation 10 comporte un écran matriciel 11 et des circuits d'adressage lignes 12 et colonnes 13. Le pixel $P_{jk}$ présente une luminance moyenne correspondant à (a+b)/2 à la suite de deux balayages successifs.

Le système permet ainsi de produire, lorsque $\underline{a}$ et $\underline{b}$ sont égaux, un état moyen égal à "1" ou un état moyen égal à "0", c'est-à-dire la teinte blanche ou noire au niveau de la visualisation du pixel P correspondant. Le système permet en outre de produire un troisième état qui est la demi-teinte "1/2" correspondant au cas où les valeurs $\underline{a}$ et $\underline{b}$ sont distinctes, l'une égale à "1" l'autre égale à "0". La luminance du point P peut donc prendre l'une des trois valeurs "1", "0" ou "1/2", étant considérée au cours de deux balayages successifs d'image effectués à une cadence déterminée pour tenir compte de la persistance rétinienne et éviter les papillotements.

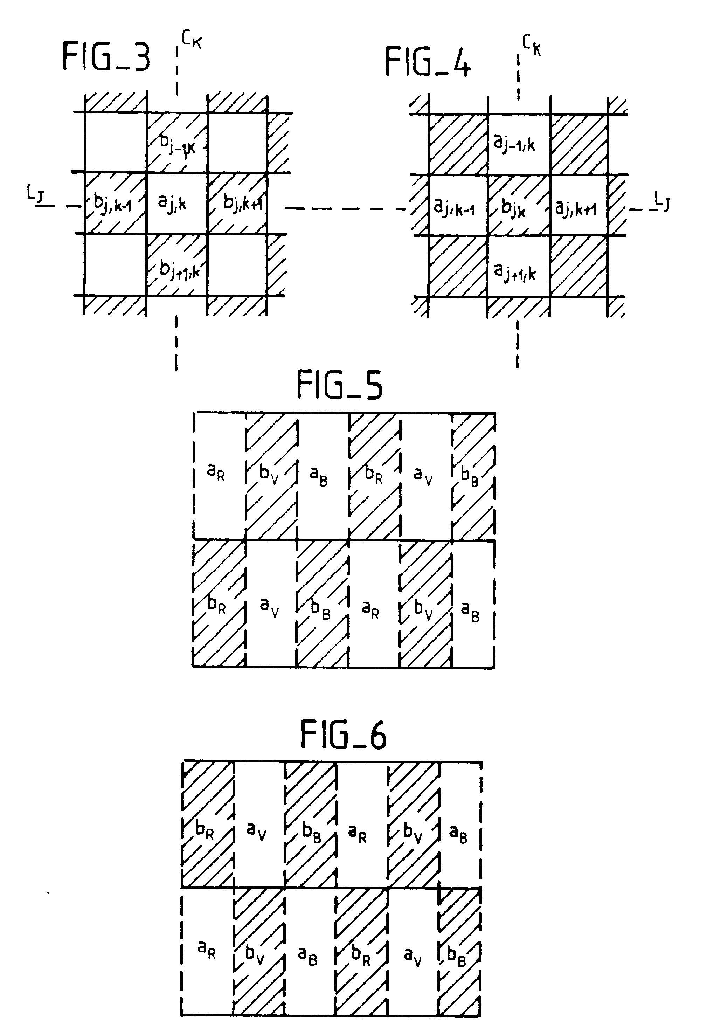

Le procédé utilisé pour extraire les informations de luminance des plans mémoires produit en outre un entrelacement d'un pixel au suivant comme il apparaît plus explicitement sur les figures 3 et 4 où l'on a considéré une petite zone de la matrice autour du pixel de rang jk. Suivant ce procédé les pixels sont formés alternativement par les informations de luminance prélevées dans le plan mémoire A pour un pixel donné et dans le plan mémoire B pour le pixel suivant, l'alternance étant également aussi bien valable en ligne qu'en colonne.

Sur les figures, on a indiqué en hachuré pour les distinguer les pixels correspondant à l'information de luminance $\underline{b}$ prélevée dans le plan B, les pixels non hachurés étant ceux prélevés dans le plan A. Il résulte de cet entrelacement en damier des pixels que la demi-teinte crée par l'effet de moyenne (a+b)/2 égal à "1/2" ne produit aucun papillotement. Ce phénomène de papillotement existerait et serait visible dans les plages demi-teintes si l'on prélevait d'abord au cours d'une phase d'adressage de rang N toutes les informations de luminance $\underline{a}$ dans le plan A et au cours de la phase d'adressage suivante de rang N+1 toutes les informations de luminance $\underline{b}$ dans le plan B.

Avec la lecture alternée en damier effectuée, cet effet de papillotement disparaît. L'image peut ainsi comporter des plages de mêmes teintes. On entend par plage au moins deux pixels voisins d'état moyen de luminance identique.

Les séquences d'adressage sont réalisées par le circuit 7 en adressant pour les phases paires d'adressage les pixels de même parité ligne et colonne tel ajk par le plan A et de parité ligne et colonne opposée tel bj,k+1 ou bj,k-1 ou bj+1,k ou bj-1,k par le plan B. Pour les phases impaires l'adressage s'effectue pour les pixels de même parité par le plan B, et de parité opposée par le plan A, c'est-à-dire de manière inverse comme on peut le voir sur la figure 4.

Il y a lieu de remarquer que plus le nombre de pixels pris en compte pour réaliser une plage monochrome est grand meilleur est l'aspect visuel.

Dans le cas d'un afficheur polychrome la répartition spatiale de pixels colorés est propre à chaque réalisation d'afficheur. Deux types de répartition sont par exemple la répartition en ligne et la répartition en diagonale des trios RVB, ces lettres indiquant respectivement la teinte rouge, verte et bleue.

Pour un afficheur à répartition en ligne, les figures 5 et 6 représentent deux phases successives d'adressage pour une zone délimitée de la matrice correspondant à quatre trios, deux en ligne et deux en colonne. On voit que la procédure d'adressage ligne et colonne correspond à celle d'un afficheur monochrome selon les figures 3 et 4.

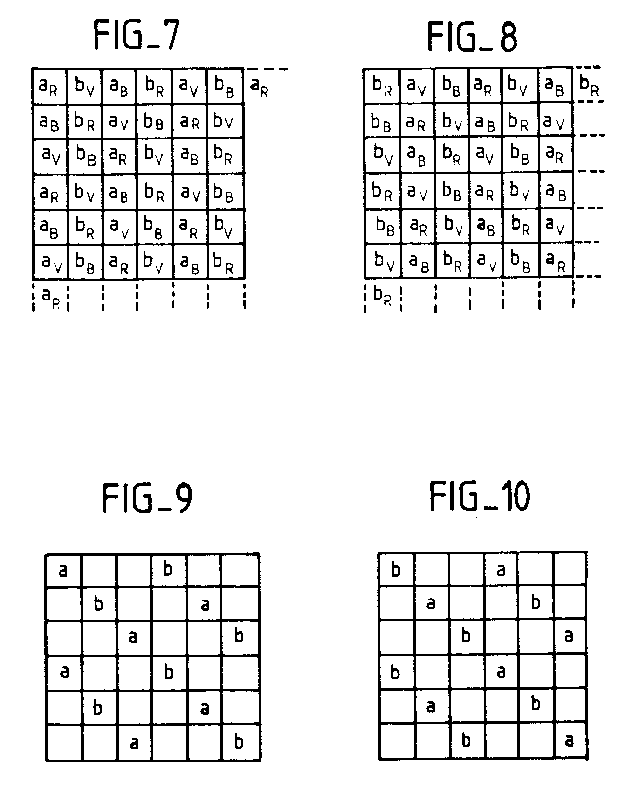

Pour un afficheur à répartition en diagonale, les figures 7 et 8 représentent deux phases successives d'adressage répartissant les pixels colorés a et b issus des plans A et B. La procédure d'adressage est différente de celle de l'afficheur monochrome ou de celle de l'afficheur polychrome à répartition en ligne décrite précédemment. A cause de la répartition en diagonale en appliquant la procédure d'adressage précédente on obtiendrait des éléments en diagonale d'une même couleur extraits d'un même plan mémoire au cours de la formation d'une image. Pour obtenir une meilleure isotropie on procède de préférence différemment pour l'adressage, en effectuant l'alternance d'une colonne à l'autre. Il y a deux phases de balayage d'images, une phase paire d'adressage des pixels des colonnes de rang pair par un premier plan mémoire et ceux des colonnes de rang impair par le deuxième plan mémoire. Pour les phases impaires d'adressage, on adresse les pixels des colonnes de rang pair par le deuxième plan mémoire et les pixels des colonnes de rang impair par le premier plan mémoire.

Les figures 9 et 10 correspondent à des extraits des figures 7 et 8 pour les pixels d'une même couleur ; dans le cas représenté il s'agit du rouge. On se rend compte avec la procédure d'adressage considérée que les éléments successifs de la diagonale sont extraits de plans mémoires différents. Bien que les éléments extraits d'une colonne quelconque pour chaque image appartiennent à un même plan les éléments successifs sont relatifs à des teintes différentes. On notera que, de même que pour l'affichage monochrome, plus le nombre de pixels réalisant une plage de même teinte est grand meilleur est l'aspect visuel correspondant.

Pour la mise en oeuvre du procédé la mémoire d'images est conçue selon le schéma figure 2 comportant en fait deux couples de plans A1,B1 et A2,B2 utilisés alternativement à la lecture et à l'écriture ; ainsi, la lecture d'une image s'effectuant, par exemple, en prélevant des données dans l'ensemble A1,B1, l'écriture de l'image suivante s'effectue simultanément en remplissant les plans A2,B2. Pour assurer ces fonctions des dispositifs commutateurs dits multiplexeurs, 4 et 6 sont interposés à l'entrée et à la sortie.

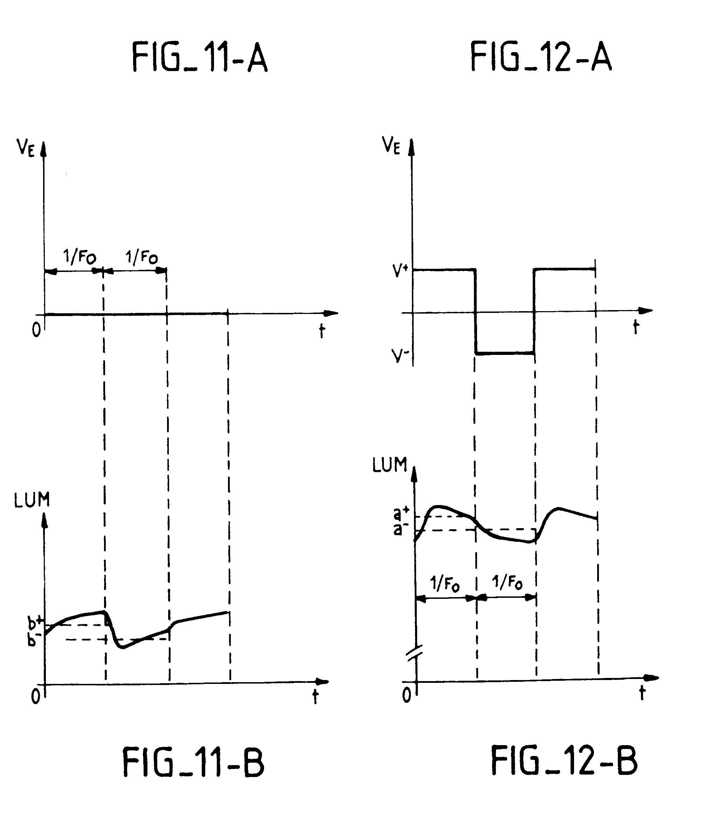

Dans le cas d'un afficheur à cristal liquide, si l'on appelle 1/F0 la durée d'une phase d'adressage permettant d'adresser successivement tous les pixels, le signal d'excitation à appliquer sur chaque pixel est symétrique, sa fréquence est F0/2. La figure 11A représente la tension $V_E$ nulle appliquée sur un pixel non excité, la figure 11B représentant la luminance correspondante pris au cours d'une première durée 1/F0 autour d'une valeur moyenne b+ et au cours d'une deuxième durée 1/F0 autour d'une valeur moyenne b-. Les figures 12A et 12B se rapportent respectivement à un pixel excité, la tension appliquée étant un créneau qui varie de +V à -V au cours des deux périodes successives 1/F0 ; l'état de luminance présente respectivement la valeur moyenne a+ et a-. La décomposition spectrale du signal $V_E$ d'excitation est exempt de raies à fréquence nulle et on évite ainsi d'appliquer au cristal liquide une composante moyenne d'excitation.

Les figures 11 et 12 représentent une période entière du signal théorique d'excitation à appliquer à un pixel allumé, (figures 12A et 12B) et à un pixel éteint (figures 11A et 11B). L'imperfection des circuits adressant chaque cellule conduit à une légère ondulation de luminance surtout à forte incidence d'observation entre deux phases d'adressage successives, les constantes de temps électriques et les constantes de temps élastiques et visqueuses propres au cristal liquide éliminent les composantes hautes fréquences.

La fréquence du signal de luminance ou fréquence d'images est donc FI = F0/2. Sa valeur minimale choisie de façon à ne pas provoquer de papillotement doit être comprise entre 45 et 60 Hz. Il s'ensuit que FO vaut entre 90 et 120 Hz au minimum pour un afficheur à cristal liquide.

Les deux états binaires de luminance différents a et b provoquent quant à eux une ondulation de luminance beaucoup plus importante. En supposant que a est le niveau de luminance d'un pixel allumé et b celui d'un pixel éteint, la réalisation de la demi-luminance (a+b)/2 nécessite deux images entières, soit quatre phases de balayage successives au lieu des deux phases envisagées précédemment dans les cas des figures 3 à 10. Les quatre niveaux de luminance a+, a-, b+, b- sont moyennés pendant le temps 4/FO. La séquence permettant d'optimiser la vision consiste à minimiser les changements de luminance et à effectuer les changements de luminance les plus importants à la fréquence la plus haute. Cette séquence optimale est donc a+, b+, a-, b- dans l'exemple représenté sur les figures 11B et 12B.

Pour un afficheur conventionnel à niveau de luminance binaire (sans demi-teinte), la luminance d'un pixel quelconque est codée par un bit. La couleur réalisée par composition spatiale d'un afficheur trichrome est codée soit par un mot de trois bits, dans lequel chaque bit représente l'état binaire de chaque pixel coloré rouge, vert, bleu, soit un nombre décimal correspondant, soit par son nom. Les $2^3$ soit huit couleurs réalisables par composition spatiale sont rappelées sur le tableau 1 qui suit.

| COULEUR N° | CODE (RVB) | NOM |
|:----------:|:----------:|:---:|
| 0 | 000 | noir |
| 1 | 001 | bleu |
| 2 | 010 | vert |
| 3 | 011 | cyan |
| 4 | 100 | rouge |
| 5 | 101 | violet |
| 6 | 110 | jaune |
| 7 | 111 | blanc |

TABLEAU 1

La moyenne temporelle sur deux états successifs de luminance binaire d'un pixel quelconque, pouvant prendre, conformément à l'invention, trois valeurs différentes peut être codée maintenant par un chiffre en base 3, ce chiffre étant la demi-somme des deux états successifs de luminance au cours d'un affichage de rang N et de l'affichage suivant de rang N+1.

La couleur réalisée par composition spatiale d'un afficheur trichrome peut donc être codée soit par un mot de trois chiffres représentant chacun les états ternaires de chacun des pixels colorés rouge, vert, bleu soit par un nombre décimal correspondant, soit par son nom. Ne peuvent être réalisées par composition spatiale que $3^3$ soit 27 couleurs différentes.

Des compositions temporelles différentes de couleurs peuvent fournir la même couleur résultante, mais parmi ces compositions une seule est optimale.

A une couleur résultante donnée, on peut ne faire correspondre qu'un et un seul couple de couleurs composées temporellement de façon optimale.

La composition temporelle des 8 couleurs composées spatialement à l'aide des 3 couleurs primaires rouge, verte et bleue peut être réalisée de 8x8 soit 64 façons différentes.

La composition temporelle (moyenne) étant commutative, le nombre de compositions temporelles non équivalentes est égal au nombre de combinaisons 2 à 2 des 8 couleurs différentes augmenté du nombre de combinaisons de chacune des 8 couleurs avecelle-même, soit 36 dans le cas présent.

Parmi ces 36 compositions temporelles, 9 sont de préférence à exclure par suite d'un manque de performance vis-à-vis de la réponse oculaire. Ces 27 compositions de couleurs différentes sont répertoriées dans le tableau 2 ci-après qui n'est pas à considérer comme unique ni limitatif.

| COULEUR N° | CODE (RVB) | NOM |
|---|---|---|
| 0 | 000 | Noir |
| 1 | 001 | Bleu (foncé) |
| 2 | 002 | Bleu (clair) |
| 3 | 010 | Vert (foncé) |
| 4 | 011 | Cyan (clair) |
| 5 | 012 | Bleu cyan |
| 6 | 020 | Vert (clair) |
| 7 | 021 | Vert cyan |
| 8 | 022 | Cyan (clair) |
| 9 | 100 | Rouge (foncé) |
| 10 | 101 | Violet (foncé) |
| 11 | 102 | Pourpre |
| 12 | 110 | Jaune (foncé) |
| 13 | 111 | Gris |
| 14 | 112 | Bleu pâle |
| 15 | 120 | Vert jaune |
| 16 | 121 | Vert pâle |
| 17 | 122 | Cyan pâle |
| 18 | 200 | Rouge (clair) |
| 19 | 201 | Rouge violet |
| 20 | 202 | Violet (clair) |
| 21 | 210 | Orange |
| 22 | 211 | Rose |
| 23 | 212 | Violet pâle |
| 24 | 220 | Jaune (clair) |
| 25 | 221 | Jaune pâle |
| 26 | 222 | Blanc |

TABLEAU 2

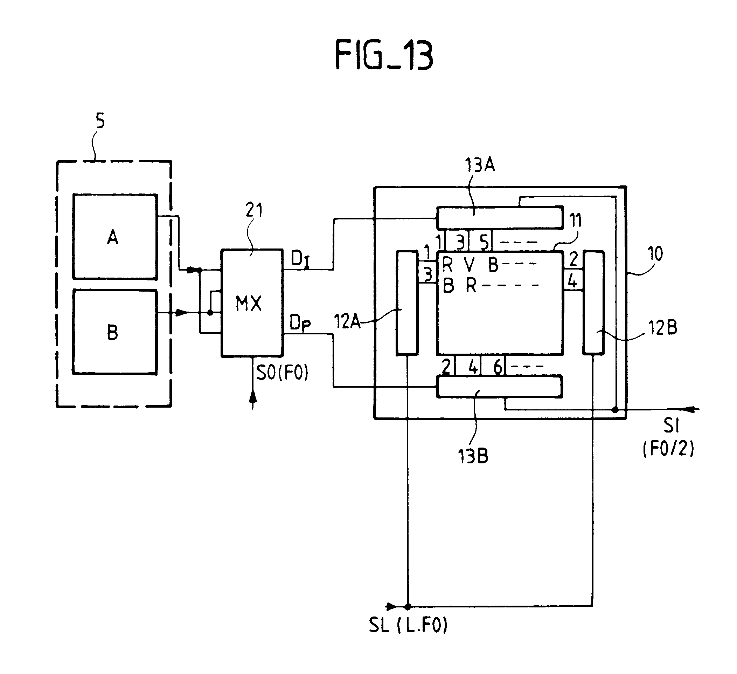

L'exemple de réalisation de la figure 13 correspond à un afficheur à cristal liquide 10 dans lequel les pixels couleur sont à répartition diagonale. Il possède un nombre C pair de colonnes et L pair de lignes. Ces circuits périphériques internes d'adressage sont constitués par un circuit 13A pour l'adressage des colonnes de rang impair et un circuit 13B pour l'adressage des colonnes de rang pair, et pour l'adressage des lignes à un circuit 12A d'adressage des lignes de rang impair et 12B d'adressage des lignes de rang pair.

Le signal vidéo binaire issu des plans mémoires A et B est sérialisé à travers un circuit multiplexeur 21 sur deux voies DI et DP destinées respectivement au circuit d'adressage colonnes 13A pour les rangs impairs et 13B pour les rangs pairs.

Divers signaux de synchronisation sont fournis aux circuits d'adressage de lignes et colonnes 12 et 13, les signaux synchrones indiqués comportent les signaux S0 de fréquence F0, SI de fréquence F0/2, et SL de fréquence L.F0 où L est le nombre de lignes.

Le contenu des plans mémoires A et B est fourni en parallèle au circuit 21 qui est un double multiplexeur commandé par le signal S0 ce circuit 21 réalise la permutation d'une colonne à l'autre des signaux en les aiguillant sur les voies respectives DI,DP d'entrée de l'afficheur 10.

Le signal SI assure les changements d'état de sortie des circuits périphériques de telle façon que le signal d'attaque d'une cellule élémentaire a la forme bipolaire de la figure 12A.

Le signal SL est utilisé pour l'adressage ligne dans les circuits 12A et 12B.

Le système de visualisation décrit est généralisable pour obtenir un nombre N de teintes intermédiaires quelconque en utilisant un nombre N de plans mémoires supérieur à 2. Dans un tel concept il faut produire N images visualisées successives dans lesquelles un groupement quelconque formant une plage de N pixels adjacents résulte du prélèvement pour chaque pixel de ce groupement d'un bit de luminance dans un plan mémoire différent à chaque fois de ceux utilisés pour les autres pixels du groupement et également différent des plans mémoires qui avaient été utilisés pour ce pixel lors de la formation des images précédentes, de manière à prélever les N bits de luminance correspondant à chaque pixel. Lorsqu'on passe d'une image à la suivante, le prélèvement est déterminé en permutant circulairement l'ordre de prélèvement dans les mémoires qui avaient été utilisé lors de l'adressage de l'image précédente. Ainsi, si l'on considère par exemple cinq plans mémoires ABCDE, on peut considérer lors de la formation de la première image que le prélèvement pour le premier pixel s'effectue en A pour le deuxième pixel en B et ainsi de suite dans le plan E pour le cinquième pixel. Lors de la deuxième image l'ordre des prélèvements sera BCDEA et ainsi de suite jusqu'au cinquième prélèvement qui sera EABCD.

Dans la pratique, le nombre N ne peut être élevé du fait des limitations physiques, notamment, de la fréquence maximale des circuits d'adressage colonne, et que la durée des N balayages successifs doit être déterminée de manière à préserver la persistance rétinienne et éviter le phénomène de papillotement.

## Revendications

1. Procédé de visualisation d'images en demi-teintes sur un écran matriciel procédant par :
   – élaboration de l'information de luminance relative à chaque pixel d'une image selon un mot de N bits (N supérieur ou égal à 2) ;
   – stockage des informations de luminance dans N plans mémoires (A,B,...) pour y stocker respectivement les différents bits de chaque mot ;
   – adressage des plans en sorte de produire, par une lecture séquentielle de ceux-ci, N images visualisées successives dans lesquelles un groupement quelconque de N pixels adjacents est obtenu en prélevant pour chaque pixel du groupement, un bit de luminance dans un plan mémoire différent de ceux déjà utilisés pour ce pixel lors de la formation des images précédentes, de manière à prélever les N bits du mot de luminance correspondant à ce pixel, et en prélevant à chaque image un bit de luminance dans un plan mémoire différent pour chacun des pixels du groupement, en sorte de prélever à chaque image un bit de luminance dans chaque plan mémoire ;
   le procédé utilisé permettant d'obtenir pour chaque pixel au cours de N balayages successifs d'images, en sus des deux valeurs de luminance blancet noir correspondant aux deux états binaires "0" et "1", N - 1 valeurs intermédiaires correspondant à des demi-teintes.

2. Procédé selon la revendication 1, caractérisé en ce que le prélèvement dans les plans mémoires d'une image à la suivante est déterminé en permutant circulairement l'ordre de prélèvement dans ces mémoires qui avaient été utilisé lors de l'adressage de l'image précédente.

3 . Procédé selon la revendication 1 ou 2, caractérisé en ce que l'information de luminance relative à chaque pixel est codée selon un mot de deux bits et le stockage des informations s'effectue dans deux plans mémoires (A,B), l'adressage des plans étant produit par lecture alternée de ceux-ci, avec une première image visualisée ou un pixel quelconque est formé par un bit de luminance correspondant prélevé dans un des plans mémoires, ce pixel étant précédé et suivi, par un pixel formé à partir du bit de luminance correspondant prélevé dans l'autre plan mémoire, ledit adressage étant déterminé pour produire ensuite une deuxième image visualisée en prélevant cette fois inversement pour chaque pixel considéré le deuxième bit de luminance correspondant dans l'autre plan mémoire non utilisé pour la première image ;
   ledit procédé permettant d'obtenir pour chaque pixel au cours des deux balayages successifs d'image,en sus des deux valeurs de luminance noir et blanc correspondant aux deux états binaires "0" et "1" la troisième valeur "1/2" correspondant à la moyenne de ces deux états et à une demi-teinte.

4. Procédé selon la revendication 3, caractérisé en ce que la fréquence d'image correspondant à la durée de balayage d'une desdites première ou seconde images est au moins égale à 45Hz et de valeur double dans le cas d'un afficheur à cristal liquide.

5. Procédé selon la revendication 3 ou 4, caractérisé en ce qu'il est procédé à l'écriture des informations de luminance d'une image dans deux plans mémoires (A2,B2) pour y stocker respectivement le premier et le deuxième bit de chaque mot et, simultanément, a lieu la lecture des informations de luminance stockées dans deux autres plans mémoires (A1,B1) où sont stockés respectivement le premier et le deuxième bit de chaque mot de l'image précédente.

6. Procédé selon l'une quelconque des revendications 3 à 5, utilisé pour un affichage couleur, caractérisé en ce que pour une disposition en lignes des pixels couleur, la séquence d'adressage des lignes et colonnes de l'afficheur est la même que dans le cas d'un afficheur monochrome, ladite séquence d'adressage comportant au moins deux phases de balayage d'image, une phase paire d'adressage des pixels de même parité lignes et colonnes par un premier plan mémoire et ceux des parité lignes et colonnes différents par le deuxième plan mémoire, et pour les phases impaires d'adressage l'adressage des pixels de même parité par le deuxième plan mémoire et des pixels de parité opposée par le premier plan mémoire.

7. Procédé selon l'une quelconque des revendications 3 à 5, utilisé pour un affichage couleur, caractérisé en ce que pour une disposition des pixels couleur en diagonale, la séquence d'adressage des lignes et colonnes de l'afficheur comporte au moins deux phases de balayage d'image, une phase paire d'adressage des pixels des colonnes de rang pair par un premier plan mémoire et ceux des colonnes de rang impair par le deuxième plan mémoire, et pour les phases impaires d'adressage l'adressage des pixels des colonnes de rang pair par le deuxième plan mémoire et des pixels des colonnes de rang impair par le premier plan mémoire.

8. Procédé selon l'une quelconque des revendications précédentes, caractérisé en ce que l'afficheur est à cristal liquide.

9. Procédé selon l'un des ensembles de revendications 6 et 8, ou 7 et 8, caractérisé en ce que la séquence d'adressage comporte quatre phases de balayage d'image.

10. Procédé selon l'une quelconque des revendications 3 à 7, caractérisé en ce que pour un affichage couleur le nombre de compositions couleurs distinctes est égal à 36.

11. Procédé selon la revendication 10, caractérisé en ce que le nombre de compositions couleurs est limité à 27 pour un rendu optimal vis-à-vis de la perception visuelle, lesdites compositions couleurs étant répertoriées sur le tableau suivant selon trois modes possibles de désignation, par un numéro de couleur 0 à 26, ou par le nom de la teinte, ou par un code constitué d'un mot de trois chiffres représentant respectivement les états binaires R,V,B. :

EP 0 311 500 B1

| COULEUR N° | CODE (RVB) | NOM |
|---|---|---|
| 0 | 000 | Noir |
| 1 | 001 | Bleu (foncé) |
| 2 | 002 | Bleu (clair) |
| 3 | 010 | Vert (foncé) |
| 4 | 011 | Cyan (clair) |
| 5 | 012 | Bleu cyan |
| 6 | 020 | Vert (clair) |
| 7 | 021 | Vert cyan |
| 8 | 022 | Cyan (clair) |
| 9 | 100 | Rouge (foncé) |
| 10 | 101 | Violet (foncé) |
| 11 | 102 | Pourpre |
| 12 | 110 | Jaune (foncé) |
| 13 | 111 | Gris |
| 14 | 112 | Bleu pâle |
| 15 | 120 | Vert jaune |
| 16 | 121 | Vert pâle |
| 17 | 122 | Cyan pâle |
| 18 | 200 | Rouge (clair) |
| 19 | 201 | Rouge violet |
| 20 | 202 | Violet (clair) |
| 21 | 210 | Orange |
| 22 | 211 | Rose |
| 23 | 212 | Violet pâle |
| 24 | 220 | Jaune (clair) |
| 25 | 221 | Jaune pâle |
| 26 | 222 | Blanc |

## Patentansprüche

1. Verfahren für die Anzeige von Bildern in Halbtönen auf einem Matrixbildschirm, das ausgeführt wird durch:

– die Erstellung der Helligkeitsinformation für jedes Bildelement eines Bildes gemäß einem Wort aus N Bits (N größer oder gleich 2);

– das Speichern der Helligkeitsinformationen in N Speicherebenen (A, B,...), um darin jeweils die verschiedenen Bits eines jeden Wortes zu speichern;

9

– die Adressierung der Ebenen, derart, daß durch ein sequentielles Lesen dieser Ebenen N aufeinanderfolgend angezeigte Bilder erzeugt werden, in denen eine beliebige Gruppe aus N benachbarten Bildelementen dadurch erhalten wird, daß für jedes Bildelement der Gruppe aus einer Speicherebene, die von den bei der Erzeugung der vorhergehenden Bilder für dieses Bildelement bereits benutzten Ebenen verschieden ist, ein Helligkeitsbit abgerufen wird, derart,

daß die N Bits des diesem Bildelement entsprechenden Helligkeitswortes abgerufen werden, und daß bei jedem Bild aus einer Speicherebene, die für jedes der Bildelemente der Gruppe unterschiedlich ist, ein Helligkeitsbit abgerufen wird, derart, daß bei jedem Bild in jeder Speicherebene ein Helligkeitsbit abgerufen wird; wobei das verwendete Verfahren gestattet, für jedes Bildelement im Verlauf von N aufeinanderfolgenden Bildabtastungen außer den den beiden binären Zuständen "0" und "1" entsprechenden Helligkeitswerten Weiß und Schwarz N-1 Zwischenwerte, die Halbtönen entsprechen, zu gewinnen.

2. Verfahren gemäß Anspruch 1, dadurch gekennzeichnet, daß das Abrufen aus den Speicherebenen von einem Bild zum nächsten dadurch bestimmt ist, daß die Reihenfolge der Abrufe in diesen Speichern, die bei der Adressierung des vorhergehenden Bildes verwendet worden waren, zyklisch permutiert wird.

3. Verfahren gemäß Anspruch 1 oder 2, dadurch gekennzeichnet, daß die Helligkeitsinformation für jedes Bildelement mit einem Zwei-Bit-Wort codiert wird und daß die Speicherung der Informationen in zwei Speicherebenen (A, B) ausgeführt wird, wobei die Adressierung der Ebenen durch ein abwechselndes Lesen derselben ausgeführt wird, mit einem ersten Anzeigebild, worin irgendein Bildelement von einem entsprechenden Helligkeitsbit gebildet wird, das aus einer der Speicherebenen abgerufen wird, wobei diesem Bildelement ein Bildelement vorhergeht und folgt, das mittels eines entsprechenden Helligkeitsbits gebildet wird, das aus der anderen Speicherebene abgerufen wird, und wobei die Adressierung so bestimmt ist, daß anschließend ein zweites Anzeigebild erzeugt wird, indem diesmal umgekehrt für jedes betreffende Bildelement das entsprechende Helligkeitsbit aus der anderen Speicherebene, die für das erste Bild nicht verwendet wurde, abgerufen wird; wobei das Verfahren gestattet, für jedes Bildelement im Verlauf zweier aufeinanderfolgender Bildabtastungen außer den zwei den beiden binären Zuständen "0" und "1" entsprechenden Helligkeitswerten Schwarz und Weiß den dritten Wert "1/2" zu erhalten, der dem Mittelwert dieser zwei Zustände und einem Halbton entspricht.

4. Verfahren gemäß Anspruch 3, dadurch gekennzeichnet, daß die Bildfrequenz, die der Abtastdauer für eines der ersten und zweiten Bilder entspricht, wenigstens gleich 45 Hz ist und im Fall einer Flüssigkristallanzeige den doppelten Wert besitzt.

5. Verfahren gemäß Anspruch 3 oder 4, dadurch gekennzeichnet, daß das Schreiben von Helligkeitsinformationen eines Bildes in zwei Speicherebenen (A2, B2) ausgeführt wird, um darin das erste bzw. das zweite Bit eines jeden Wortes zu speichern, und gleichzeitig das Lesen von Helligkeitsinformationen stattfindet, die in zwei anderen Speicherebenen (A1, B1) gespeichert sind, in denen das erste bzw. das zweite Bit eines jeden Wortes des vorhergehenden Bildes gespeichert sind.

6. Verfahren gemäß einem der Ansprüche 3 bis 5, das für eine Farbanzeige verwendet wird, dadurch gekennzeichnet, daß für eine Zeilenanordnung von Farbbildelementen die Adressierungsreihenfolge der Zeilen und Spalten der Anzeige dieselbe wie im Fall einer monochromen Anzeige ist, wobei die Adressierungsreihenfolge wenigstens zwei Bildabtastphasen umfaßt, nämlich eine geradzahlige Adressierungsphase in einer ersten Speicherebene für Bildelemente gleicher Zeilen- und Spaltenparität und in der zweiten Speicherebene für Bildelemente mit verschiedener Zeilen- und Spaltenparität, und eine ungeradzahlige Adressierungsphase in der zweiten Speicherebene für Bildelemente gleicher Parität und in der ersten Speicherebene für Bildelemente mit entgegengesetzter Parität.

7. Verfahren gemäß einem der Ansprüche 3 bis 5, das für eine Farbanzeige verwendet wird, dadurch gekennzeichnet, daß für eine diagonale Anordnung von Farbbildelementen die Adressierungsreihenfolge der Zeilen und Spalten der Anzeige wenigstens zwei Bildabtastphasen umfaßt, nämlich eine geradzahlige Adressierungsphase in einer ersten Speicherebene für die Bildelemente der Spalten mit geradzahligem Rang und in der zweiten Speicherebene für die Bildelemente der Spalten mit ungeradzahligem Rang, und eine ungeradzahlige Adressierungsphase in der zweiten Speicherebene für die Bildelemente der Spalten mit geradzahligem Rang und in der ersten Speicherebene für die Bildelemente der Spalten mit ungeradzahligem Rang.

8. Verfahren gemäß einem der vorangehenden Ansprüche, dadurch gekennzeichnet, daß die Anzeige vom Flüssigkristalltyp ist.

9. Verfahren gemäß einer der Gruppen von Ansprüchen 6 und 8 oder 7 und 8, dadurch gekennzeichnet, daß die Adressierungsreihenfolge vier Bildabtastphasen umfaßt.

10. Verfahren gemäß einem der Ansprüche 3 bis 7, dadurch gekennzeichnet, daß für eine Farbanzeige die Anzahl der verschiedenen Farbzusammensetzungen gleich 36 ist.

11. Verfahren gemäß Anspruch 10, dadurch gekennzeichnet, daß die Anzahl der Farbzusammensetzungen für eine in bezug auf die visuelle Wahrnehmung optimale Wiedergabe auf 27 begrenzt ist, wobei die Farbzusammensetzungen in der folgenden Tabelle in drei möglichen Bezeichnungsweisen verzeichnet sind: durch eine Farbnummer 0 bis 26 oder durch den Namen des Farbtons oder durch einen Code, der aus einem Wort aus drei Ziffern besteht, die jeweils die binären Zustände R, G, B darstellen:

| Farbnummer | Code (RGB) | Name |
|---|---|---|
| 0 | 000 | Schwarz |
| 1 | 001 | Blau (dunkel) |
| 2 | 002 | Blau (hell) |
| 3 | 010 | Grün (dunkel) |
| 4 | 011 | Cyan (hell) |
| 5 | 012 | Cyanblau |
| 6 | 020 | Grün (hell) |
| 7 | 021 | Cyangrün |
| 8 | 022 | Cyan (hell) |
| 9 | 100 | Rot (dunkel) |
| 10 | 101 | Violett (dunkel) |
| 11 | 102 | Purpur |
| 12 | 110 | Gelb (dunkel) |
| 13 | 111 | Grau |
| 14 | 112 | Blaßblau |
| 15 | 120 | Grün-Gelb |
| 16 | 121 | Blaßgrün |
| 17 | 122 | Blaßcyan |
| 18 | 200 | Rot (hell) |
| 19 | 201 | Rot-Violett |
| 20 | 202 | Violett (hell) |
| 21 | 210 | Orange |
| 22 | 211 | Rosé |
| 23 | 212 | Blaßviolett |
| 24 | 220 | Gelb (hell) |
| 25 | 221 | Blaßgelb |
| 26 | 222 | Weiß |

## Claims

1. A method of displaying half-tone images on a matrix screen performed by:
– preparation of the luminance information relative to each pixel of an image in a word of N bits (N being greater than or equal to 2);

11

– storing the luminance information in N memory planes (A, B,... ) in order to store therein the different bits of each word, respectively;

– addressing the planes in such a manner as to produce, by sequential reading of the same, N successive displayed images in which any given group of N adjacent pixels is obtained by sensing for each pixel of the group, a luminance bit in a memory plane different to those already utilized for this pixel at the formation of the preceding images in such a manner as to sense the N bits of the luminance word corresponding to this pixel, and sensing at each image a luminance bit in a different memory plane for each of the pixels of the group in such a manner as to sense at each image a luminance bit in each memory plane;

the method utilized rendering it possible to obtain for each pixel during the course of N successive image scans, in addition to the two white and black luminance values corresponding to the two binary states "0" and " 1 ", N - 1 intermediate values corresponding to half-tones.

2. The method as claimed in claim 1, characterized in that the sensing of a bit in the memory planes from one image to the next one is determined by circularly permutating the order of sensing in those memories which have been utilized in the course of addressing the preceding image.

3. The method as claimed in claim 1 or in claim 2, characterized in that the luminance information relative to each pixel is encoded as a word of two bits and the storing of information is performed in two memory planes (A, B), the addressing of the planes being performed by alternate reading of the same, with a first displayed image wherein any given pixel is formed by a corresponding luminance bit which is sensed in one of the memory planes, said pixel being preceded and followed by a pixel formed on the basis of the corresponding luminance bit sensed in the other memory plane, said addressing being determined so as to ensure to produce a second displayed image by this time inversely sensing for each pixel considered the second corresponding luminance bit in the other memory plane, which is not utilized for the first image; said method rendering it possible to obtain for each pixel in the course of two successive scans of the image in addition to the two black and white luminance values corresponding to two binary states of "0" and " 1 " the third value of " 1/2" corresponding to the mean of these two states and to a half-tone.

4. The method as claimed in claim 3, characterized in that the image frequency corresponding to the duration of scanning of one of said first and second images is at least equal to 45 Hz and twice this value in the case of a liquid crystal display.

5. The method as claimed in claim 3 or in claim 4, characterized in that one proceeds by writing the luminance information of an image in two memory planes (A2, B2) in order to store therein the first and the second bit of each word, respectively, and simultaneously reading the luminance information stored in two other memory planes (A1, B1) wherein the first and the second bit of each word of the preceding image are stored, respectively.

6. The method as claimed in any one of claims 3 through 5, as utilized for a color display, characterized in that for an arrangement in color pixel lines the sequence of addressing the lines and columns of the display is the same as in the case of a monochrome display, said addressing sequence comprising at least two phases of image scanning, an even phase of addressing pixels of the same line and column parity by a first memory plane and those of different line and column parity by the second memory plane, and for the odd addressing phases, the addressing of pixels with the same parity by the second memory plane and pixels of opposite parity by the first memory plane.

7. The system as claimed in any one of claims 3 through 5 as utilized for a color display, characterized in that for a diagonal arrangement of the color pixels the addressing sequence for the lines and columns of the display comprises at least two image scanning phases, one even phase of addressing pixels of even rank columns by a first memory plane, and those of odd rank columns by the second memory plane, and for the odd phases of addressing, the addressing of pixels of even rank columns by the second memory plane and of pixels of odd rank columns by the first memory plane.

8. The system as claimed in any one of the preceding claims, characterized in that the display is a liquid crystal one.

9. The method as claimed in any one of claims 6 and 8 or 7 and 8, characterized in that the sequence of addressing comprises four phases of image scanning.

10. The system as claimed in any one of claims 3 through 7, characterized in that for a color display the number of distinct color combinations is equal to 36.

11. The method as claimed in claim 10, characterized in that the number of color combinations is limited to 27 for an optimum effect with respect to visual perception, said color compositions being listed in the following table with three possible modes of designation, by a color number of 0 through 26, or by the name of the tone, or by a code constituted by a word of three digits representing the binary states R, G, B, respectively:

12

| Color No. | Code (RVB) | Name |
|-----------|-----------|------|
| 0 | 000 | Black |
| 1 | 001 | blue (dark) |
| 2 | 002 | blue (light) |
| 3 | 010 | green (dark) |
| 4 | 011 | cyan (light) |
| 5 | 012 | cyan blue |
| 6 | 020 | green (light) |
| 7 | 021 | cyan green |
| 8 | 022 | cyan (light) |
| 9 | 100 | red (dark) |
| 10 | 101 | violet (dark) |
| 11 | 102 | purple |
| 12 | 110 | yellow (dark) |
| 13 | 111 | gray |
| 14 | 112 | pale blue |
| 15 | 120 | yellow-green |
| 16 | 121 | pale green |
| 17 | 122 | pale cyan |
| 18 | 200 | red (light) |
| 19 | 201 | violet-red |
| 20 | 202 | violet (light) |
| 21 | 210 | orange |
| 22 | 211 | pink |
| 23 | 212 | pale violet |
| 24 | 220 | yellow (light) |
| 25 | 221 | pale yellow |
| 26 | 222 | white |

GENERATEUR
DE
SYMBOLES

PROCESSEUR
GRAPHIQUE

EXT

PROCESSEUR

MEMOIRE
D'IMAGE

$a_{jk}$ $b_{jk}$

A B

SEQUENCEUR
ADRESSAGE

ECRAN MATRICIEL

$P_{jk}$

FIG_1

FIG_2

MEMOIRE D'IMAGES

A1 B1

A2 B2

(2) (10)

SEQUENCEUR - ADRESSEUR

14

FIG_3

FIG_4

FIG_5

FIG_6

# FIG_7

| $a_R$ | $b_V$ | $a_B$ | $b_R$ | $a_V$ | $b_B$ | $a_R$ |
|-------|-------|-------|-------|-------|-------|-------|
| $a_B$ | $b_R$ | $a_V$ | $b_B$ | $a_R$ | $b_V$ | |
| $a_V$ | $b_B$ | $a_R$ | $b_V$ | $a_B$ | $b_R$ | |
| $a_R$ | $b_V$ | $a_B$ | $b_R$ | $a_V$ | $b_B$ | |
| $a_B$ | $b_R$ | $a_V$ | $b_B$ | $a_R$ | $b_V$ | |
| $a_V$ | $b_B$ | $a_R$ | $b_V$ | $a_B$ | $b_R$ | |
| $a_R$ | | | | | | |

# FIG_8

| $b_R$ | $a_V$ | $b_B$ | $a_R$ | $b_V$ | $a_B$ | $b_R$ |
|-------|-------|-------|-------|-------|-------|-------|
| $b_B$ | $a_R$ | $b_V$ | $a_B$ | $b_R$ | $a_V$ | |
| $b_V$ | $a_B$ | $b_R$ | $a_V$ | $b_B$ | $a_R$ | |
| $b_R$ | $a_V$ | $b_B$ | $a_R$ | $b_V$ | $a_B$ | |
| $b_B$ | $a_R$ | $b_V$ | $a_B$ | $b_R$ | $a_V$ | |
| $b_V$ | $a_B$ | $b_R$ | $a_V$ | $b_B$ | $a_R$ | |
| $b_R$ | | | | | | |

# FIG_9

| a | | | b | | |
|---|---|---|---|---|---|
| | b | | | a | |
| | | a | | | b |
| a | | | b | | |
| | b | | | a | |
| | | a | | | b |

# FIG_10

| b | | | a | | |
|---|---|---|---|---|---|
| | a | | | b | |
| | | b | | | a |
| b | | | a | | |
| | a | | | b | |
| | | b | | | a |

# FIG_11-A

# FIG_12-A

$V_E$

$1/F_O$  $1/F_O$

0  $t$

$V_E$

$V^+$

$V^-$

0  $t$

LUM

$b^+$
$b^-$

0  $t$

LUM

$a^+$
$a^-$

$1/F_O$  $1/F_O$

0  $t$

# FIG_11-B

# FIG_12-B

# FIG_13